# EUROPÄISCHE PATENTSCHRIFT

(11) **EP 0 953 521 B1**
(45) Veröffentlichungstag und Bekanntmachung des Hinweises auf die Patenterteilung: **09.04.2003**
(21) Anmeldenummer: 99107682.9
(22) Anmeldetag: 16.04.1999
(51) Int. Cl.: B65G 17/06

(54) **Plattenkette**
Platform Chain
Chaîne à palettes

(30) Priorität: 29.04.1998 DE 29807758 U
(43) Veröffentlichungstag der Anmeldung: 03.11.1999
(73) Patentinhaber: JOH. WINKLHOFER & SÖHNE GmbH & Co KG, D-81369 München (DE)
(72) Erfinder: Teuber, Toralf, 85375 Neufahrn (DE); Grabmann, Peter, 86570 Sainbach (DE)
(74) Vertreter: Grünecker, Kinkeldey, Stockmair & Schwanhäusser Anwaltssozietät

(56) Entgegenhaltungen:
- BE-A- 464 745
- DE-B- 1 049 302
- DE-U- 8 519 209
- US-A- 2 685 361

## Beschreibung

Die vorliegende Erfindung bezieht sich auf eine Plattenbandkette mit miteinander an Gelenkstellen verbundenen Kettengliedern, wobei die Gelenkstellen zumindest eine Hülse und einen Bolzen umfassen, und mit zumindest auf einer Seite der Kettenglieder angeordneten Transportplatten mit einer ebenen Transportfläche, die gemeinsam ein Plattenband bilden, jeweils mit einem von einer Gelenkstelle umfaßten Bolzen fest verbunden sind und deren Transportfläche nicht von den Endbereichen der Bolzen überragt ist.

Derartige Plattenbandketten umfassen lange Kettenglieder, wobei jeder Bolzen an einer Gelenkstelle mit einer Transportplatte verbunden ist. Um eine möglichst stabile Befestigung der Bolzen mit der Transportplatte zu erreichen, ist der Verbindungskopf des Bolzens im Durchmesser größer ausgebildet, als der Rest des Bolzens. Dieser Verbindungskopf ist dann in eine entsprechende Verbindungsbohrung in der Transportplatte eingepreßt. Meistens ist der Bolzen mittels lösbarer Befestigungseinrichtungen, z.B. Splintstifte oder Sicherungsringe ebenfalls lösbar an den Kettengliedern befestigt. Es gibt auch Varianten, bei denen der Bolzen nicht Bestandteil des Gelenkes selbst ist, sondern durch einen Hohlbolzen des Außenkettengliedes hindurchgesteckt ist, so daß ein Austauschen der Transportplatten ohne Demontage der Kettenglieder erfolgen kann. Des weiteren sind auch Varianten bekannt, bei denen die Transportplatte auf ihrer Unterseite einen kleinen Führungsbolzen aufweist, der in einer Öffnung der zugeordneten Außen- bzw. Innenlasche geführt ist, so daß sich die Transportplatte nicht übermäßig um den Hauptbefestigungsbolzen drehen kann. Ein Nachteil der bislang bekannten Plattenbandketten besteht darin, daß große Anstrengungen unternommen werden müssen, damit die Transportplatten ein möglichst ebenes Plattenband bilden. Hierzu sind separate Ausrichtvorgänge und enge Herstellungstoleranzen notwendig. Schon geringer Versatz der Transportplatten zueinander bzw. Winkelungenauigkeiten, weil diese schräg zueinander ausgerichtet sind, können bei der Förderung von auf der Transportfläche der Transportplatten angeordneten Gegenständen, zu unerwünschten Vibrationen und somit nachteiligen Wirkungen führen. Da auf derartigen Plattenbandketten auch Gegenstände gefördert werden können, die höher als breit bzw. lang sind, kann es durch die Vibrationen zu übermäßiger Lärmbelästigung und sogar zum Umstürzen der Gegenstände kommen.

Die belgische Druckschrift BE 464745 A aus dem Jahre 1946 beschreibt eine Plattenbandkette, die auf beiden Seiten ein Plattenband aufweist. Innen- und Außenlaschen 9 werden in wechselnder Folge wie bei einer üblichen Laschenkette aneinender gefügt. Allerdings sind sowohl die Innen- als auch die Außenlaschen jeweils auf ein- und demselben Bolzen aufgeschoben. Dieser steht dann seitlich über, so dass gekröpfte Platten 11 und zwei Bolzen ein- und desselben Außenkettengliedes verbunden sind. Durch die Kröpfung liegt immer ein Teil dieser Plattenbandglieder auf dem jeweils anderen Teil des benachbarten Plattenbandgliedes auf.

Bei der Druckschrift DE 85 19 209 U handelt es sich um eine normale Laschenkette, bei der seitlich überstehende Endbereiche 40,41 zum Verrasten eines zusätzlichen Traggliedes verwendet werden. Das Tragglied weist einen U-förmigen Querschnitt auf und ist an den Innenseiten seiner U-Schenkel mit Aussparungen 28 versehen, in die Endabschnitte 41 der Bolzen 40 eingreifen. Jedes dieser Elemente ist jedoch nur an einem einzigen Gelenkbolzen 40 verrastet. Gemeinsam bilden diese Elemente ein Plattenband.

Die Druckschrift US 2 685 361 A befasst sich mit einer in einen Bodenkanal eingelassenen Rollenkette. Die Rollenkette umfasst Außenkettenglieder und Innenkettenglieder, die abwechselnd aneinander angeordnet sind. Das Außenkettenglied weist eine untere Außenlasche 14 und eine obere Lasche 20 auf, die mittels zweier Stifte 18 miteinander verbunden sind. Die obere Lasche 20 ragt über den Kanal hinaus und übergreift diesen seitlich. Der Zwischenraum zwischen zwei oberen Außenlaschen wird mittels eines Vorsprungbereiches 30 der oberen Innenlasche 29 des Innenkettengliedes im Wesentlichen verschlossen. Das Innenkettenglied besteht demnach aus einer unteren Innenlasche 15 und der entsprechend im mittleren Bereich mit dem Vorsprung 30 versehenen oberen Innenlasche 29 sowie diese Laschen miteinander verbindenden Hülsen 17, auf denen jeweils eine Rolle 16 drehbar angeordnet ist. Im Zusammenspiel miteinander wird mittels der oberen Außenlasche 20 und der oberen Innenlasche 29 ein Abdeckband erzeugt, wodurch Schmutzpartikel nicht so leicht in den Kanal eindringen können. In bestimmten gleichmäßigen Abständen sind die Stifte 19 nach oben in Form von Mitnahmestiften 30 verlängert.

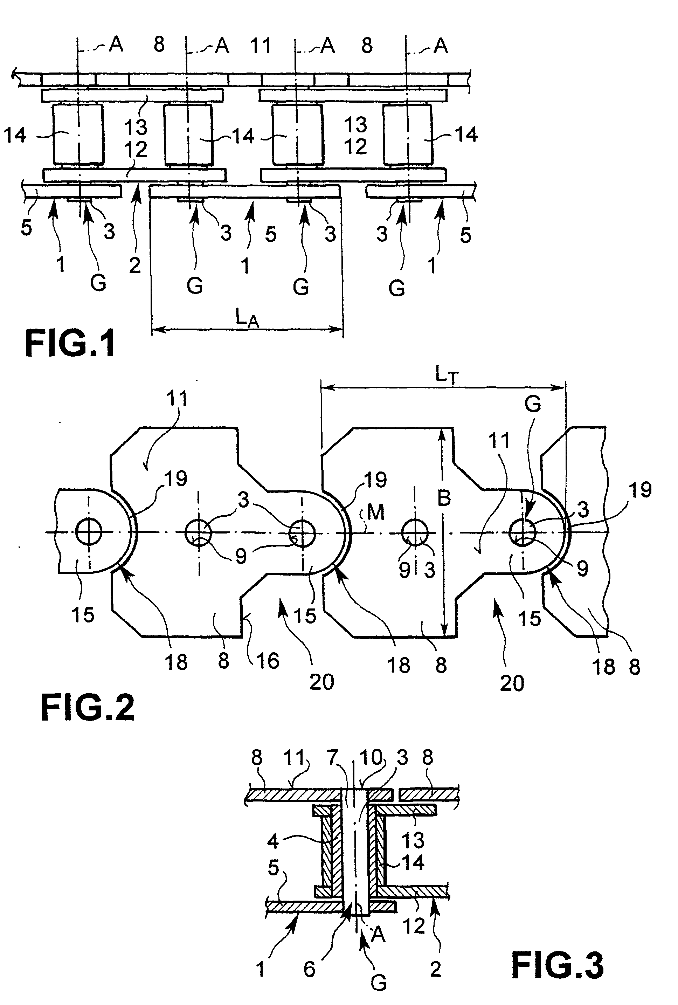

Gemäß der Druckschrift DE 10 49 302 B werden nachträglich auf die überstehenden Endabschnitte der Stifte 34 Rollenkettenelemente aufgeclipst. Hierbei kann es sich gemäß den Fig. 1 bis 9 sowie 21 und 22 auch um Glieder 24 bzw. 94 eines Plattenbandes handeln. Während in der Ausführungsform der Fig. 1 bis 7 und der Ausführungsform der Fig. 8 und 9 das Plattenband parallel zur Stiftachse angeordnet ist, zeigt die Ausführungsform der Fig. 21 und 22 eine Version, bei der das Plattenband senkrecht zu den Stiften ausgerichtet ist. Die Befestigung der Plattenbandelemente erfolgt jedoch immer an beiden Endbereichen der Stifte. Gemäß den Ausführungsformen der Fig. 11 bis 15 ist es auch möglich, ein Befestigen der Elemente an den Laschen und nicht den Stiften zu bewirken. Bevorzugt sind die nachträglich aufsteckbaren Elemente aus einem geeigneten Werkstoff, der eine ausreichende Elastizität für die Zwecke, z.B. einen Kunststoff aufweist.

Es ist daher die Aufgabe der vorliegenden Erfindung, eine Plattenbandkette der eingangs genannten Art bereitzustellen, die auf konstruktiv einfache Weise ein möglichst genaues Plattenband aufweist.

Diese Aufgabe wird erfindungsgemäß dadurch gelöst, daß jede Transportplatte mit zwei benachbarten Bolzen von zwei benachbarten Gelenkstellen fest verbunden ist und die Transportplatte eine der Außenlaschen eines Kettengliedes ersetzt. Der Erfinder hat erkannt, daß ein Hauptproblem bislang verwendeter Plattenbandketten darin besteht, daß die Verbindung der Trägerplatte mit einem einzigen Befestigungsbolzen zu unerwünschten Fertigungsungenauigkeiten führt. Durch die Verwendung von zwei benachbarten Bolzen zum Anbringen einer Transportplatte, verdoppelt sich die Anzahl der Befestigungspunkte und somit der Möglichkeiten die Platte bezüglich eines Befestigungspunktes auszurichten. Die Transportplatte ist auch besser gegenüber einwirkenden Kräften abgestützt, da sie nicht nur wie beim Stand der Technik eine einzige zentrale Abstützung umfaßt. Des weiteren verhindert der zweite Bolzen auch ein Verdrehen der Transportplatte um die erste Befestigungsstelle, so daß sich ein Hin- und Herbewegen der Transportplatte, wie es im Stand der Technik meistens der Fall ist, durch die Vibration der Kette nicht einstellt. Dieser Aufbau ist relativ starr und daher vibrationsarm. Ein Hauptvorteil besteht aber, wie oben bereits erwähnt, auch darin, daß das Ausrichten der einzelnen Transportplatten zueinander aufgrund der zweifachen Befestigung durch die beiden Bolzen bei der Fertigung einfacher und besser möglich ist.

Gemäß einer Ausführungsform kann vorgesehen sein, daß abwechselnd Innen- und Außenkettenglieder miteinander verbunden sind, daß die Innenkettenglieder zwei parallel zueinander angeordnete Innenlaschen und zwei diese miteinander verbindende Hülsen umfassen und die Außenkettenglieder zwei parallel zueinander angeordnete Außenlaschen und zwei diese miteinander verbindende Bolzen umfassen, wobei eine Hülse des Innenkettengliedes und ein Bolzen des Außenkettengliedes jeweils von einer Gelenkstelle umfaßt sind, und daß die Länge einer Transportplatte größer ist als die Länge eines Kettengliedes. Bislang wurden für Plattenbandketten immer lange Kettenglieder verwendet, deren Länge größer ist als die Länge der Transportplatten. Der Grund hierfür lag darin, daß die Transportplatten immer nur an einem einzigen Bolzen befestigt waren. Durch die Befestigung an zwei benachbarten Bolzen eines Außenkettengliedes können handelsübliche Laschenketten verwendet werden, deren Teilung kleiner ist, als die bislang übliche Teilung bei Plattenbandketten. Hierdurch verringert sich auch der Polygoneffekt, was wiederum zu einem ruhigeren Lauf der Kette beiträgt.

Bislang war es bei Plattenbandketten immer üblich, daß die Transportplatten parallel zu einer Außenlasche der Kette angeordnet wurden. Durch die Tatsache, daß die Transportplatte nunmehr mit den beiden Bolzen eines Außenkettengliedes fest verbunden ist, besteht auch die Möglichkeit, auf die Außenlasche an dieser Stelle ganz zu verzichten und diese durch die Transportplatte zu ersetzen. Hierdurch wird eine enorme Anzahl an Bauelementen eingespart, was die erfindungsgemäße Kette sehr kostengünstig macht.

Bevorzugterweise können die Transportplatten zwei Bohrungen aufweisen, wobei in jede der beiden Bohrungen ein Endbereich eines Bolzens eingepreßt ist. Es handelt sich hierbei um eine einfach und präzise herzustellende Verbindung, die eine ausreichende Ausrichtmöglichkeit bietet. Eine solche Verbindungstechnik hat sich als besser herausgestellt, als z.B. Verschweißen, da bei dieser bekannten Verbindungstechnik Fluchtungsfehler entstehen können.

Bislang verwendete Bolzen für Plattenbandketten, die in die Transportplatten eingepreßt wurden, wiesen immer einen speziell ausgeformten Verbindungskopf auf, damit eine möglichst genaue Ausrichtung erreichbar war. Da die Ausrichtung durch die zweifache Befestigung erheblich verbessert ist, kann auf eine derartige Ausgestaltung verzichtet werden. Gemäß einer Variante ist deshalb vorgesehen, daß die Bolzen eine Zylinderform mit gleichbleibendem Durchmesser aufweisen. Es können demnach herkömmliche Kettengelenkbolzen verwendet werden, ohne entsprechend vergrößerte Einpreßbereiche. Lediglich auf der gegenüberliegenden Seite von der Transportplatte kann die Außenlasche noch durch Vemieten des Bolzens befestigt werden, wodurch dieser am Endbereich im Durchmesser leicht aufgeweitet sein kann. Eine solche Verbindungstechnik ist aber auf der Seite der Transportplatte nicht möglich, weil der Bolzen nicht über die Transportfläche überstehen sollte.

Bei einer Ausführungsform ist vorgesehen, daß eine Stirnseite der Transportplatte einen Vorsprung mit halbkreisförmigem Kantenbereich aufweist, der symmetrisch zur Mittellinie der Transportplatte angeordnet ist und einen Radius aufweist, der im wesentlichen dem halben Mittenabstand der Bolzen entspricht. Des weiteren kann vorgesehen sein, daß die andere Stirnseite der Transportplatte eine halbkreisförmige Aussparung aufweist, die symmetrisch zur Mittellinie der Transportplatte angeordnet ist und in der der halbkreisförmige Kantenbereich des Vorsprungs der benachbarten Transportplatte angeordnet ist. Hierdurch ist eine enge Aneinandergrenzung der Transportplatten möglich, ohne daß es zu Behinderungen kommt, wenn diese z.B. um ein Kettenrad herumgeführt wird.

Aufgrund der Tatsache, daß die Transportplatten zum Transportzweck eine gewisse Mindestbreite aufweisen müssen und jede Transportplatte an zwei Bolzen befestigt ist, müssen unvermeidbar Lücken in der Transportoberfläche des Plattenbandes vorhanden sein, damit bei einer Kurvenfahrt der Kette, z.B. um ein Kettenrad, die Transportplatten nicht aneinanderstoßen. Je nach Anwendungszweck und Größe der Kette, können derartige Lücken ein Sicherheitsrisiko darstellen. Gemäß einer weiteren Ausführungsform ist hierzu vorgesehen, daß die Transportplatten Abdeckbereiche aufweisen, die derart ausgestaltet sind, daß sie eine benachbarte Transportplatte untergreifen und Lücken in der Transportoberfläche durch diese Bereiche von unten her im wesentlichen abgedeckt sind. Das bedeutet, daß die Abdeckung z.B. so bemessen sein muß, daß kein Finger in die Lücken zwischen den Transportplatten gesteckt werden kann. Wenn die Abdeckbereiche an den Transportplatten selbst angeordnet sind, so sind keine zusätzlichen Maßnahmen am Führungsaufbau für die Plattenbandkette zu treffen. Die Ausformung der Abdeckbereiche muß so erfolgen, daß keine Behinderung durch diese bei einer Kurvenfahrt der Plattenbandkette erfolgt.

Eine weitere Vereinfachung der Abdeckung von Lücken in der Transportoberfläche besteht darin, daß die Abdeckbereiche durch dickenreduzierende Ausnehmungen an der Transportoberfläche der Transportplatten gebildet sind und daß die untergriffenen Abschnitte der Transportplatten entsprechende dickenreduzierende Ausnehmungen an der Unterseite der Transportplatten aufweisen, in denen die Abdeckbereiche im wesentlichen fluchtend angeordnet sind. Hierdurch können die Transportplatten weiterhin relativ dünn ausgestaltet sein, ohne daß zum Ausbilden der Abdeckbereiche unnötig viel Platz aufgewendet werden muß. Derartige Transportplatten können z.B. so hergestellt sein, daß sie im Bereich ihrer Befestigung eine maximale Dicke und an den Abdeckbereichen und untergriffenen Abschnitten entsprechend in der Dicke reduziert sind. Eine solche Form läßt sich z.B. auch aus einer Platte bestimmter Dicke durch spanende Formgebung herstellen.

Bei einer sehr einfachen Variante ist jedoch vorgesehen, daß die Transportplatten durch zwei aufeinander angeordneten, im wesentlichen gleich ausgestalteten Plattenelementen gebildet sind, die zum Bilden der Abdeckbereiche und der untergriffenen Abschnitte spiegelsymmetrisch zu einer senkrecht zur Kettenachse verlaufenden Symmetrieachse angeordnet sind. Bestehen die Transportplatten z.B. aus Stahlblech, so können zwei dünnere Plattenelemente ausgestanzt und dann wie erwähnt spiegelsymmetrisch aufeinandergelegt werden. Gegebenenfalls kann eine zusätzliche Befestigung der Plattenelemente durch Verschweißung stattfinden. Die Abdeckbereiche und die untergriffenen Abschnitte befinden sich dann jeweils an einer Stelle der Transportplatte, wo die beiden Plattenelemente nicht unmittelbar aufeinanderliegen. Da für die Erzeugung solch aufgebauter Transportplatten lediglich ein und dieselbe Form von Plattenelementen erforderlich ist, handelt es sich hierbei um eine äußerst kostengünstige Lösung.

Im folgenden werden Ausführungsbeispiele der vorliegenden Erfindung anhand einer Zeichnung näher erläutert. Es zeigen:
- Fig. 1: einen Ausschnitt einer Plattenbandkette in einer Seitenansicht,
- Fig. 2: die Plattenbandkette aus Figur 1 in einer Draufsicht,
- Fig. 3: eine Gelenkstelle der Plattenbandkette aus Figur 1 im Vollschnitt,
- Fig. 4: eine zweite Ausführungsform einer Plattenbandkette im Bereich eines Kettenrads in einer Draufsicht,
- Fig. 5: eine Transportplatte der Kette aus Fig. 4 in einer Seitenansicht und
- Fig. 6: die Transportplatte aus Fig. 5 in einer Draufsicht.

Die in den Figuren dargestellte Plattenbandkette umfaßt abwechselnd aneinander angeordnete Außenkettenglieder 1 und Innenkettenglieder 2, die jeweils an einer Gelenkstelle G miteinander verbunden sind.

Insbesondere aus der Figur 3 ist zu erkennen, daß jede Gelenkstelle G einen Bolzen 3, der dem Außenkettenglied 1 zugeordnet ist und eine Hülse 4 umfaßt, die dem Innenkettenglied 2 zugeordnet ist. Der Bolzen 3 weist eine Zylinderform 3 mit einer Achse A auf und erstreckt sich durch die Öffnung der Zylinderhülse 4 des Innenkettengliedes 2.

Das Außenkettenglied 1 umfaßt weiter eine Außenlasche 5, die mittels einer Preßverbindung mit den Endbereichen 6 der zwei Bolzen 3 eines Außenkettengliedes 1 verbunden ist. Die gegenüberliegenden Endbereiche 7 der zwei Bolzen 3 eines Außenkettengliedes 1 sind mit einer Transportplatte 8 verbunden, die auf dieser Seite die Funktion der zweiten Außenlasche übernimmt. Die Endbereiche 7 sind jeweils in einer Bohrung 9 der Transportplatte 8 aufgenommen. Hierbei schließen die Stirnseiten 10 am Endbereich 7 im wesentlichen bündig mit der Transportoberfläche 11 der Transportplatte 8 ab. Durch die Aneinanderreihung der Transportplatten 8 der Außenkettenglieder 1 entsteht ein gewünschtes Plattenband. Dabei ist jede Transportplatte 8 mittels den zwei Bolzen 3 eines Außenkettengliedes 1 fest verbunden. Dies erfolgt durch eine Preßpassung an den Endbereichen 7 im Zusammenspiel mit der Bohrung 9. Die Transportplatte 8 ist parallel zur Außenlasche 5 angeordnet und weist im wesentlichen die gleiche Dicke auf.

Das Innenkettenglied 2 umfaßt im wesentlichen zwei parallel zueinander angeordnete Innenlaschen 12 und 13, die mittels der Hülse 4 miteinander verbunden sind. Die Hülse 4 ist in entsprechenden Bohrungen der Laschen 12 und 13 eingepreßt, so daß die Stirnseiten der Hülse 4 bündig mit den Außenseiten der Laschen 12 und 13 abschließen. Die Hülse 4 und der Bolzen 3 bilden eine Gelenkstelle G, so daß das Innenkettenglied 2 gegegenüber dem Außenkettenglied 1 um die Achse A verschwenkbar ist. Auf der Außenfläche der Hülse 4 ist bei dem dargestellten Ausführungsbeispiel noch eine Laufrolle 14 drehbar gelagert, die den Verschleiß an dieser Stelle vermindern soll. Jedem Innenkettenglied 2 sind entsprechend zwei Hülsen 4 zugeordnet. Der Mittenabstand der Hülsenachsen 4 entspricht im wesentlichen dem Mittenabstand der Achsen A der Bolzen 3 des Außenkettengliedes 1.

Insbesondere aus der Figur 2 ist zu erkennen, daß jede Transportplatte 8 eine Länge L_{T} aufweist, die größer ist, als eine Länge L_{A} einer Außenlasche 5. Des weiteren weist die Transportplatte 8 an ihrer einen Stirnseite einen halbkreisförmigen Vorsprung 15 auf, der symmetrisch zur Mittenachse M ausgebildet ist. Der Vorsprung 15 ist schmaler als die größte Breite B der Transportplatte 8. Der Vorsprung 15 erstreckt sich über ca. die Hälfte der Gesamtlänge L_{T} der Transportplatte 8 und steht entsprechend über die Stirnseite 16 über. Eine der Gelenkstellen G befindet sich im Bereich des Vorsprungs 15, wobei die Achse A das Zentrum für den Kreisbogen des Vorsprungs 15 bildet. Die gegenüberliegende Stirnseite 17 weist eine kreisbogenförmige Aussparung 18 auf, innerhalb derer der kreisbogenförmige Abschnitt des Vorsprungs 15 der angrenzenden Transportplatte 8 angeordnet ist. Hierbei verbleibt ein kleiner kreisringförmiger Spalt 19. Die Kreisbogenform der Aussparung 18 hat ebenfalls als Zentrum die Achse A des angrenzenden Vorsprungs 15. Damit die Plattenkette auch um enge Kurven fahren kann, ist zwischen der Stirnseite 16 der einen Transportplatte 8 und der Stirnseite 17 der anderen Transportplatte 8 eine Lücke 20 angeordnet, die zum Auffangen entsprechender Bewegungen der Transportplatten 8 dient. Es besteht die Möglichkeit, diese Lücken 20 im späteren Betrieb durch geeignete Maßnahmen zu überbrücken bzw. abzudecken. Für eine Abdekkung eignen sich insbesondere Leisten, die der Unterseite der Transportplatten 8 zugeordnet sind. Die Kette könnte z.B. in einem geeigneten C-Profil laufen, wobei sich die Transportplatten 8 außerhalb der C-Profilschiene befinden und die C-Stege die Lücke 20 entsprechend von unten verschließen.

Im folgenden wird die Wirkungsweise der oben beschriebenen Ausführungsform näher erläutert.

Durch die Befestigung einer Transportplatte 8 an den zwei Bolzen 3 desselben Außenkettengliedes 1, ergibt sich eine hohe Montagegenauigkeit der Transportplatte 8. Hierdurch werden Fluchtungsfehler gegenüber dem Stand der Technik erheblich minimiert, da sich die Abstützung der Transportplatte 8 auf zwei voneinander beabstandete Befestigungsstellen verteilt. Des weiteren erhöht sich die Teilezahl gegenüber einer herkömmlichen Rollenkette nicht, da die Transportplatte 8 gleichzeitig die Funktion der einen Außenlasche übernimmt. Hierdurch verringert sich auch die Bauhöhe der Plattenbandkette. Durch die oben beschriebene Ausführungsform wird eine Plattenbandkette erzielt, die eine sehr gute ebene Transportoberfläche 11 umfaßt. Insbesondere sind Fluchtungsfehler und Winkelungenauigkeiten durch die doppelte Befestigung jeder Transportplatte 8 weitgehenst minimiert.

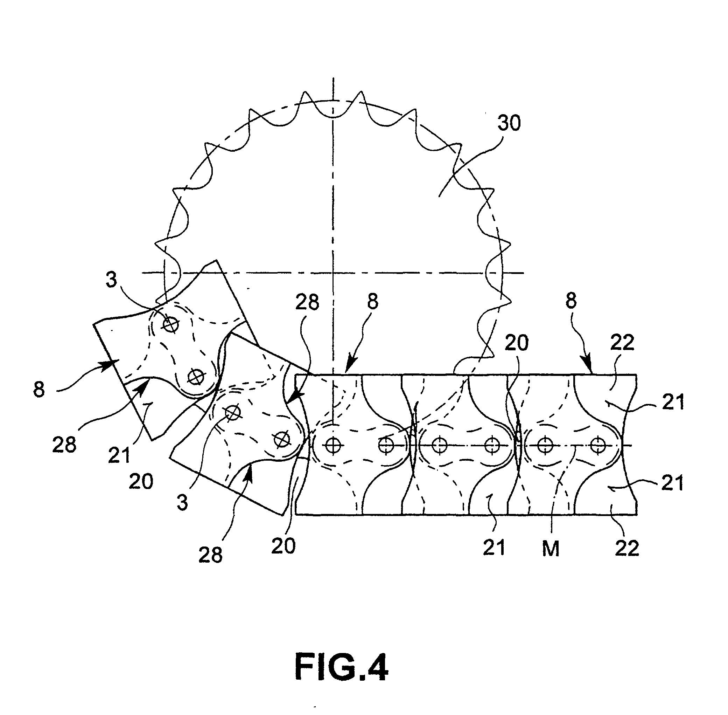

Anhand der Fig. 4 bis 6 wird eine zweite Ausführungsform der Plattenbandkette näher erläutert. Sofern auf gleiche bzw. identische Bauelemente Bezug genommen wird, werden die gleichen Bezugsziffern, wie bei dem vorangegangenen Ausführungsbeispiel verwendet und es wird auf die obige Beschreibung verwiesen.

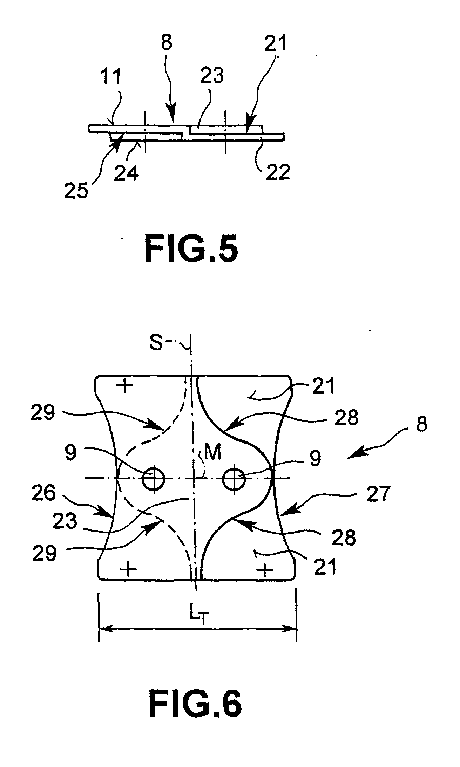

Der Hauptunterschied dieser zweiten Ausführungsform einer Plattenbandkette besteht in der Ausgestaltung der Transportplatten 8. Diese ist nach wie vor mit Bohrungen 9 versehen, die fest auf den Endbereichen der Bolzen 3 aufsitzen. Betrachtet man die Transportplatte 8 in der Seitenansicht, wie Fig. 5, so ist zu erkennen, daß die Transportoberfläche 11 der Transportplatte 8 nicht durchgängig ist, sondern daß ober- und unterhalb der Mittellinie M dickenreduzierende Ausnehmungen 21 eingeformt sind. Der verbleibende Rest der Trägerplatte, der den Boden 22 der Ausnehmung 21 bildet, weist etwas weniger als die halbe Dicke der Gesamtdicke der Transportplatte 8 auf. Der mittlere Bereich 23 der Transportplatte 8, der die beiden Bohrungen 9 umfaßt, weist die vollständige Dicke der Transportplatte 8 auf. Spiegelsymmetrisch zu einer Spiegelachse S, die senkrecht die Mittelachse M schneidet, sind auf der Rückseite 24 der Transportplatte 8 ebenfalls Ausnehmungen 25 ober- und unterhalb der Mittellinie M ausgebildet. Anhand der Fig. 6 ist sehr gut zu erkennen, daß die Ausnehmungen 21, die sich in der Fig. 6 rechts zur Symmetrieachse S befinden, nach oben hin offen sind, wohingegen die Ausnehmungen 25, die links von der Symmetrieachse S ober- und unterhalb der Mittellinie M angeordnet sind, zur Rückseite 24 der Transportplatte 8 hin offen sind.

In der Draufsicht (siehe Fig. 6) ist diese Transportplatte 8 aus einer rechteckigen Grundform gebildet, wobei die jeweils zur benachbarten Transportplatte 8 weisenden Seitenkanten 26 und 27 jeweils mit einer segmentförmigen Aussparung versehen sind. Die Ausnehmungen 21 sind zum erhöhten mittleren Bereich 23 der Transportplatte 8 hin durch eine im wesentlichen S-förmige Seitenkante 28 abgegrenzt. In ähnlicher Weise erfolgt die Abgrenzung der Ausnehmung 25 an der Rückseite 24 mittels der S-förmig gebogenen Seitenkanten 29.

Anhand der Fig. 4 ist zu erkennen, daß die durch die Ausnehmungen 21 gebildeten Böden 22 in die Ausnehmungen 25 an der Rückseite 24 eingreifen, so daß die Transportplatten 8 stellenweise übereinander angeordnet sind. Da die Ausnehmungen 21 und 25 eine entsprechende Tiefe aufweisen, stellt dies kein Fluchtungsproblem dar. Lediglich im mittleren Bereich verbleibt zwischen den einzelnen Transportplatten 8 eine kleine Lücke 20, wenn die Plattenbandkette gerade geführt ist. Wird die Plattenbandkette um ein Kettenrad 30 herumgeführt, so ist anhand der Fig. 4 weiter zu erkennen, daß sich die Transportplatten 8 gegeneinander verschwenken. Hierdurch wird der Boden 22 immer weiter in die Ausnehmung der benachbarten Transportplatte 8 eingeschoben, bis die Ausnehmungen 21, 25 keine weitere Verschwenkung mehr zulassen (sofern es sich, wie in Fig. 4 dargestellt, um das kleinst mögliche Kettenrad handelt). Die Ausnehmungen 21 und 25 auf der gegenüberliegenden Seite der Mittellinien der zugeordneten Transportplatten 8 kommen außer Eingriff, so daß ein vergrößerter Spalt 20 entsteht. Dieser Spalt 20 ist jedoch noch so klein, daß er allen Anforderungen bezüglich Minimierung eines Verletzungsrisikos erfüllt.

Aus dem obigen ist ersichtlich, daß die Form der Ausnehmungen 21 und 25, sowie die Kontur der Seitenkanten 26 und 27 sowie der Seitenkanten 28 und 29 aufeinander abgestimmt werden muß, damit eine entsprechende gewollte Verschwenkung der Transportplatten 8, bei Beibehaltung einer möglichst großen Transportoberfläche 11, möglich ist.

Anhand der Figuren ist auch zu vermuten, daß sich die Transportplatte 8 anstelle, daß sie aus einem einzigen Stück hergestellt wird, auch aus zwei identisch ausgeformten Plattenelementen hergestellt werden kann. Diese beiden Plattenelemente werden dann spiegelsymmetrisch zur Symmetrieachse S (diese ist mittig zu den Bohrungen 9 angeordnet) aufeinandergelegt, so daß deren Bohrungen 9 miteinander fluchten. Dann werden die beiden Plattenelemente auf die Endbereiche 7 der Bolzen 8 aufgepreßt. Vorab kann ein Verschweißen derartiger Plattenelemente, z.B. durch Punktverschweißen erfolgen. Bedient man sich gleich ausgestalteter Plattenelemente, so läßt sich aufgrund der reduzierten Dicke der Einzelplatten eine sichere Plattenbandkette herstellen, ohne nennenswerte Erhöhung der Herstellungskosten.

## Patentansprüche

1. Plattenbandkette mit miteinander an Gelenkstellen (G) verbundenen Kettengliedern (1,2), wobei die Gelenkstellen (G) zumindest eine Hülse (4) und einen Bolzen (3) umfassen, und mit zumindest auf einer Seite der Kettenglieder (1,2) angeordneten Transportplatten (8) mit einer ebenen Transportfläche (11),die gemeinsam ein Plattenband bilden, die jeweils mit einem von einer Gelenkstelle (G) umfaßten Bolzen (3) fest verbunden sind und deren Transportfläche (11) nicht von den Endbereichen (7) der Bolzen (3) überragt ist,
und daß jede Transportplatte (8) mit zwei benachbarten Bolzen (3) von zwei benachbarten Gelenkstellen (G) fest verbunden ist, **dadurch gekennzeichnet, daß** die Transportplatte (8) eine der Außenlaschen eines Kettengliedes (1) ersetzt.

2. Plattenbandkette nach Anspruch 1,
**dadurch gekennzeichnet,**
**daß** abwechselnd Innen- und Außenkettenglied (1,2) miteinander verbunden sind, daß die Innenkettenglieder (2) zwei parallel zueinander angeordnete Innenlaschen (12,13) und zwei diese miteinander verbindende Hülsen (4) umfassen und die Außenkettenglieder (1) zwei parallel zueinander angeordnete Außenlaschen (5,8) und zwei diese miteinander verbindende Bolzen (3) umfassen, wobei eine Hülse (4) des Innenkettengliedes (2) und ein Bolzen (3) des Außenkettengliedes (1) jeweils von einer Gelenkstelle (G) umfaßt sind und daß die Länge (L_{T}) einer Transportplatte (8) größer ist als die Länge (L_{A}) eines Kettengliedes (L_{A}).

3. Plattenbandkette nach einem der vorangegangenen Ansprüche,
**dadurch gekennzeichnet,**
**daß** die Transportplatten (8) zwei Bohrungen (9) aufweisen und daß in jede der beiden Bohrungen (9) ein Endbereich (7) eines Bolzens (3) eingepreßt ist.

4. Plattenbandkette nach einem der vorangegangenen Ansprüche,
**dadurch gekennzeichnet,**
**daß** die Bolzen (3) eine Zylinderform mit gleichbleibendem Durchmesser aufweisen.

5. Plattenbandkette nach einem der vorangegangenen Ansprüche,
**dadurch gekennzeichnet,**
**daß** die eine Stirnseite (16) der Transportplatte (8) einen Vorsprung (15) mit halbkreisförmigem Kantenbereiche aufweist, der symmetrisch zur Mittellinie (M) der Transportplatte (8) angeordnet ist und einen Radius aufweist, der im wesentlichen dem halben Mittenabstand der Bolzen (3) entspricht.

6. Plattenbandkette nach einem der vorangegangenen Ansprüche,
**dadurch gekennzeichnet,**
**daß** die andere Stirnseite (17) der Transportplatte (11) eine halbkreisförmige Aussparung (18) aufweist, die symmetrisch zur Mittellinie (M) der Transportplatte (8) angeordnet ist und in der der halbkreisförmige Kantenbereich des Vorsprungs (15) der benachbarten Transportplatte (8) angeordnet ist.

7. Plattenbandkette nach einem der vorangegangenen Ansprüche,
**dadurch gekennzeichnet,**
**daß** die Transportplatten (8) Abdeckbereiche aufweisen, die derart ausgestaltet sind, daß sie eine benachbarte Transportplatte (8) untergreifen und Lücken (20) in der Transportoberfläche (11) durch diese Bereiche von unten her im wesentlichen abgedeckt sind.

8. Plattenbandkette nach Anspruch 7,
**dadurch gekennzeichnet**
**daß** die Abdeckbereiche durch dickenreduzierende Ausnehmungen (21) an der Transportoberfläche (11) der Transportplatten (8) gebildet sind und daß die untergriffenen Abschnitte der Transportplatten (8) entsprechende dickenreduzierende Ausnehmungen (25) an der Unterseite (24) der Transportplatten (8) aufweisen, in denen die Abdeckbereiche im wesentlichen fluchtend angeordnet sind.

9. Plattenbandkette nach Anspruch 7 oder 8,
**dadurch gekennzeichnet,**
**daß** die Transportplatten (8) durch zwei aufeinander angeordneten, im wesentlichen gleich aufgestalteten Plattenelementen (8) gebildet sind, die zum bilden der Abdeckbereiche und der untergriffenen Abschnitte spiegelsymmetrisch zu einer senkrecht zur Kettenachse verlaufenden Symmetrieachse (S) angeordnet sind.

## Claims

1. An apron-conveyor chain comprising chain links (1, 2) interconnected at hinge points (G), said hinge points (G) being provided with at least one sleeve (4) and one bolt (3), and further comprising transport plates (8) arranged on at least one side of said chain links (1, 2) and provided with a flat transport surface (11), said transport plates (8) forming an apron conveyor in common and being each firmly connected to a bolt (3) included in a hinge point (G), the end portions (7) of said bolts (3) projecting not beyond the transport surfaces (11) of said transport plates (8), and each transport plate (8) being firmly connected to two neighbouring bolts (3) of two neighbouring hinge points (G),
**characterized in that**
the transport plate (8) replaces one of the outer link plates of a chain link (1).

2. An apron-conveyor chain according to claim 1,
**characterized in that**
inner chain links (2) and outer chain links (1) are alternately connected to one another, that the inner chain links (2) comprise two inner link plates (12, 13) which are arranged in parallel and two sleeves (4) by means of which said inner link plates are connected, and that the outer chain links (1) comprise two outer link plates (5, 8) which are arranged in parallel and two bolts (3) by means of which said outer link plates are connected, one sleeve (4) of the inner chain link (2) and one bolt (3) of the outer chain link (1) being included in a respective hinge point (G), and that the length (L_{T}) of a transport plate (8) is longer than the length (L_{A}) of a chain link.

3. An apron-conveyor chain according to one of the preceding claims,
**characterized in that**
the transport plates (8) are provided with two holes (9) and that an end portion (7) of a bolt (3) is pressed into each of said two holes (9).

4. An apron-conveyor chain according to one of the preceding claims,
**characterized in that**
the bolts (3) have the shape of a cylinder with a uniform diameter.

5. An apron-conveyor chain according to one of the preceding claims,
**characterized in that**
one end face (16) of the transport plate (8) is provided with a projection (15) with a semicircular edge region, which is arranged symmetrically with regard to the centre line (M) of the transport plate (8) and which has a radius that corresponds essentially to half the centre-to-centre distance of the bolts (3).

6. An apron-conveyor chain according to one of the preceding claims,
**characterized in that** the other end face (17) of the transport plate (8) is provided with a semicircular recess (18) which is arranged symmetrically with regard to the centre line (M) of the transport plate (8) and in which the semicircular edge region of the projection (15) of the neighbouring transport plate (8) is arranged.

7. An apron-conveyor chain according to one of the preceding claims,
**characterized in that**
the transport plates (8) are provided with cover regions which are implemented in such a way that they engage a neighbouring transport plate (8) from below and that gaps (20) in the transport surface (11) are essentially covered from below by these regions.

8. An apron-conveyor chain according to claim 7,
**characterized in that**
the cover regions are formed by thickness-reducing recesses (21) on the transport surface (11) of the transport plates (8) and that the transport plate portions engaged from below are provided with corresponding thickness-reducing recesses (25) on the lower surface (24) of the transport plates (8) in which the cover regions are arranged in a substantially aligned mode of arrangement.

9. An apron-conveyor chain according to claim 7 or 8,
**characterized in that**
the transport plates (8) are defined by two plate elements (8) which are arranged one on top of the other and which have essentially the same structural design, said plate elements being arranged mirror-symmetrically with respect to a symmetry axis (S), which extends at right angles to the chain axis, so as to define the cover regions and the portions engaged from below.

## Revendications

1. Chaîne à palettes comportant des éléments de chaîne (1, 2) reliés les uns aux autres au niveau de points d'articulation (G), dans laquelle les points d'articulation (G) comprennent au moins une douille (4) et un boulon (3), et comportant des plaques de transport (8) disposées au moins sur un côté des éléments de chaîne (1, 2), qui comprennent une surface de transport (11) plane, qui forment conjointement une palette, qui sont respectivement reliés de façon fixe à un boulon (3) compris dans un point d'articulation (G) et dont la surface de transport (11) ne dépasse pas des zones d'extrémité (7) des boulons (3), chaque plaque de transport (8) étant reliée de façon fixe par deux boulons (3) adjacents de deux points d'articulation (G) adjacents,
**caractérisée en ce que** la plaque de transport (8) remplace un des maillons externes d'un élément de chaîne (1).

2. Chaîne à palettes selon la revendication 1,
**caractérisée en ce que** les éléments de chaîne internes et externes (1,2) sont reliés de façon alternée, **en ce que** les éléments de chaîne internes (2) comportent deux maillons internes (12, 13) disposés parallèlement l'un à l'autre et deux douilles (4) les reliant l'un à l'autre, et les éléments de chaîne externes (1) comportent deux maillons externes (5, 8) disposés parallèlement l'un à l'autre et deux boulons (3) les reliant l'un à l'autre, une douille (4) de l'élément de chaîne interne (2) et un boulon (3) de l'élément de chaîne externe (1) étant compris respectivement dans un point d'articulation (G), et **en ce que** la longueur (L_{T}) d'une plaque de transport (8) est supérieure à la longueur (L_{A}) d'un élément de chaîne (L_{A}).

3. Chaîne à palettes selon l'une des revendications précédentes,
**caractérisée en ce que** les plaques de transport (8) présentent deux perçages (9) et **en ce que** dans chacun des deux perçages (9) est enfoncée une zone d'extrémité (7) d'un boulon (3).

4. Chaîne à palettes selon l'une des revendications précédentes,
**caractérisée en ce que** les boulons (3) présentent une forme cylindrique d'un diamètre qui reste constant.

5. Chaîne à palettes selon l'une des revendications précédentes,
**caractérisée en ce qu'**une face avant (16) de la plaque de transport (8) présente une saillie (15) avec des zones d'arête-en forme de demi-cercle, laquelle est disposée symétriquement par rapport à la ligne médiane (M) de la plaque de transport (8) et présente un rayon qui correspond sensiblement à la moitié de l'écart au centre des boulons (3).

6. Chaîne à palettes selon l'une des revendications précédentes,
**caractérisée en ce que** l'autre face (17) de la plaque de transport (11) présente un évidement (18) en forme de demi-cercle disposé symétriquement par rapport à la ligne médiane (M) de la plaque de transport (8), dans lequel est disposée la zone d'arête semi-circulaire de la saillie (15) de la plaque de transport adjacente (8).

7. Chaîne à palettes selon l'une des revendications précédentes,
**caractérisée en ce que** les plaques de transport (8) présentent des zones de recouvrement qui sont formées de façon telle qu'elles passent sous une plaque de transport (8) adjacente et que des creux (20) de la surface de transport (11) sont essentiellement recouverts par ces zones depuis le dessous.

8. Chaîne à palettes selon la revendication 7,
**caractérisée en ce que** les zones de recouvrement sont formées par des évidements (21) par réduction d'épaisseur au niveau de la surface de transport (11) des plaques de transport (8), et **en ce que** les segments des plaques de transport (8) qui passent dessous présentent des évidements par réduction d'épaisseur (25) correspondants au niveau de la partie inférieure (24) des plaques de transport (8), dans lesquels les zones de recouvrement sont disposées de façon sensiblement affleurante.

9. Chaîne à palettes selon la revendication 7 ou 8,
**caractérisée en ce que** les plaques de transport (8) sont réalisées par deux éléments de plaque (8) disposés l'un au dessus de l'autre et façonnés de façon sensiblement similaire, lesquels sont disposés de façon à former les zones de recouvrement, en étant symétriques des segments s'insérant dessous, par rapport à un axe de symétrie (S) s'étendant perpendiculairement à l'axe de la chaîne.
